# EUROPEAN PATENT APPLICATION

(11) **EP 3 937 276 A1**
(43) Date of publication of application: **12.01.2022**
(21) Application number: 20185140.9
(22) Date of filing: 10.07.2020
(51) Int. Cl.: H01M 4/04, H01M 4/38, H01M 4/62, H01M 4/02, H01M 4/40

(54) **ANODE AND LITHIUM ION BATTERY**

(71) Applicant: Bayerische Motoren Werke Aktiengesellschaft, 80809 München (DE)
(72) Inventor: Ogihara, Hideki, 85778 Haimhausen (DE); Handa, Tokuhiko, Tokyo, 1600004 (JP)

(57) **Abstract**

An anode for a lithium ion battery has an anode composite comprising an anode active material supported on a current collector, wherein the anode active material comprises a component selected from the group consisting of Si, SiOₓ, Si-C-composite, alloys of Si, Bi and/or Sn, conversion materials and combinations thereof, wherein the anode shows a volume change of 180 % or less during a first charge/discharge cycle of the lithium ion battery and wherein the anode composite has a peeling strength after the first charge/discharge cycle of 2.5 N/m or more.

Further, a lithium ion battery with such an anode is presented.

## Description

The invention is directed to an anode and a lithium ion battery comprising said anode.

Lithium ion batteries have at least two electrodes, a positive electrode (cathode) and a negative electrode (anode). Each of these electrodes comprises at least one active material, i.e. the lithium ion battery has at least one cathode active material and at least one anode active material. For preparing the electrode, the active material is combined with other additives to form a respective electrode slurry, which is thoroughly mixed for homogenization and then applied on a current collector, typically an aluminium foil for the cathode and a copper foil for the anode. During manufacture of the lithium ion battery, the cathode and the anode are arranged into an electrode assembly, e.g. by arranging the electrodes in stacks on top of each other, wherein a separator is used between the cathode and the anode for electrical isolation.

In a lithium ion battery, both the anode and the cathode must be able to reversibly take up and dispense lithium ions to allow charge/discharge cycles of the lithium ion battery, also termed insertion and extraction of lithium ions, respectively. During the insertion and extraction of the lithium ions, respectively, the active materials can show high volume changes. The size of these volume changes depends on the type of active materials used in the respective electrode. Especially anode active materials suitable for lithium ion batteries with high capacity show large volume changes, especially changes in the thickness of an anode composite. Such high capacity lithium ion batteries are needed e.g. in traction batteries of electrical vehicles. These volume changes can lead to a deformation of the electrode, which can also lead to the electrode compositions peeling off their respective electrode current collector. This effect can limit the performance and the lifetime of the lithium ion battery. Accordingly, lithium ion battery design has aimed at a compromise between the size of the volume change of the anode active material and the achievable capacity of the lithium ion battery, therefore limiting the amount of high capacity anode active material. There is a demand for electrode and battery designs in which capacity can be maximized while maintaining the integrity of the anode composite.

The object of the invention is to provide a means for improving the performance and/or the lifetime of a high capacity lithium ion battery.

The object of the invention is solved by an anode for a lithium ion battery having an anode composite comprising an anode active material supported on a current collector, wherein the anode active material comprises a component selected from the group consisting of Si, SiOₓ, Si-C-composite, alloys of Si, Bi and/or Sn, conversion materials and combinations thereof, wherein the anode composite shows a volume change of 180 % or less during a first charge/discharge cycle of the lithium ion battery, and wherein the anode composite has a peeling strength after a first charge/discharge cycle of 2.5 N/m or more.

The term "conversion materials" refers to anode active materials that require breaking and reforming bonds during lithium insertion and extraction, respectively. Preferred conversion materials are transition metal oxides, fluorides and nitrides, e.g. FeₓO_{y}, NiO and CuO.

The inventors found that anode active materials which show large volume changes during charge/discharge cycles can be used in lithium ion batteries with extended lifetimes and improved performance, if the peeling strength of the anode composite is controlled to be high enough and the overall volume change of the anode composite is limited by specific measures during preparation of the anode composite. It is contemplated that low volume changes would induce a high peeling strength and prevent the anode composite of the anode from peeling of the electrode current collector, i.e. the anode current collector, thereby preventing damages to the anode during the charge/discharge cycles. In this way, high capacity anode active materials can be used, thereby increasing the capacity of a lithium ion battery comprising said anode.

The expected size of volume change during charge/discharge cycles for a given active material can be estimated by comparing the theoretical unit cell volumes of the fully delithiated and fully lithiated active material. In the case of Si as anode active material, the theoretical unit cell volume of Si (fully delithiated) and of Li_{4.4}Si (fully lithiated) must be compared, which amounts to an estimated volume change of close to 400 %. The volume change of microscopical particles made from the anode active material can even surpass the estimated volume change. E.g., in the case of Si particles, volume changes of up to 800 % during charging have been observed. The anode according to the invention allows the use of such anode materials in a lithium ion battery with extended lifetime even if the expected, i.e. theoretical, volume change is high.

In most cases, the anode does not fully recover to its initial volume after a first charge/discharge cycle, i.e. after the charge of the anode. Therefore, a sufficiently low volume change upon the first charge/discharge cycle is preferred. During the lifetime of a lithium ion battery, the volume can increase, e.g. by a solid electrolyte interface (SEI) increasing in size with each charge/discharge cycle. However, as the SEI forms mostly on the first charge/discharge cycle, a low volume change after this first charge/discharge cycle indicates that no SEI of detrimental size has been formed.

The peeling strength can be measured according to JIS Z0237 (2009), i.e. the peeling strength is defined according to a 180° peeling test.

The anode active material comprises a component selected from the group consisting of Si, SiOₓ, Si-C-composite, alloys of Si, Bi and/or Sn, conversion materials and combinations thereof.

In one embodiment, the anode active material is a silicon-based anode active material selected from the group consisting of Si, SiOₓ, Si-C-composite, Si alloys, and combinations thereof.

Anode active materials with components as described above provide higher capacities in lithium ion batteries compared to conventional graphite-based anode active materials. However, especially in the case of silicon-based anode active materials, these anode active materials show large volume changes of the anode composite of up to 400 % during charge/discharge cycles of the lithium ion battery, limiting the amount of the anode active material in the anode. Using an anode composite with sufficiently high peeling strength and an overall low volume change enables the use of these high capacity anode active materials while maintaining sufficiently long lifetime of the lithium ion battery.

The amount of anode active material in the electrode slurry can be in the range of from 80 to 100 wt.%, based on the solids content of the electrode slurry.

The anode as described before and having the high peeling strength in combination with a limited volume change of the anode composite is especially obtainable by preparing an electrode slurry comprising a porosity modifier, and applying the electrode slurry on a current collector to form the anode composite supported on the anode current collector.

According to an embodiment, the electrode slurry has a solids content of from 30 wt.% to 70 wt.%, preferably from 40 wt.% to 55 wt.%.

The cycling profile of the lithium ion battery, especially the first charge/discharge cycle, is preferably adapted to the anode composition and other components of the lithium ion battery as known in the art.

E.g., if the anode active material is SiOₓ and a cathode active material of the lithium ion battery is NMC811 (LiNi_{0.8}Mn_{0.1}Co_{0.1}O₂), the first charge/discharge cycle can use the following sequence: first, the lithium ion battery is charged with constant current (CC) to a voltage of 4.2 V with a current of C/10, followed by charging with constant voltage (CV) at 4.2 V until the current reaches C/50. The first discharge is then done with a current of C/10 to 2.8 V.

The porosity modifier functions as a means to increase the porosity of the anode composite obtained from the electrode slurry. Typically, during the preparation of an electrode slurry, the individual components must be thoroughly mixed to provide sufficient homogeneity. In this procedure, bubbles can be formed within the electrode slurry which are in the state of the art are removed by applying a vacuum for degassing at the end of the slurry preparation process. According to the invention, the porosity modifier functions as a means to stabilize the bubbles, increase the size of the bubbles and/or create new bubbles in the electrode slurry.

Especially, the bubbles result in a higher porosity of the anode composite after preparation of the electrode slurry and application on the current collector. E.g., the higher porosity is kept over a multitude of additional manufacturing steps in the preparation of the anode as known in the state of the art, e.g. heating, drying and/or pressing of the anode.

The inventors have found that increasing the porosity provides anode composites which exhibit a low overall volume change and at the same time high peeling strength after the first charge/discharge cycle of the lithium ion battery even though an anode active material is used which shows a high volume change during charge/discharge cycles. The inventors contemplate that the porosity modifier increases the porosity of the anode so that additional and/or larger pores are obtained. The additional free volume can be filled up by the anode active material when the lithium ion battery is charged and will be set free again at least partially when discharging the lithium ion battery. In this way, the overall volume change of the anode can be at least partially suppressed and high peeling strengths of the anode composite can be maintained.

While not wishing to be bound by theory, the porosity of the anode can be increased by 1 to 30 % compared to an anode having the same composition but no porosity modifier and before pressing during the manufacture of the anode, e.g. by calendaring.

The porosity can be determined by measuring the weight and thickness of the electrode, calculating an electrode density from these values and comparing the electrode density with a bulk density of the components of the electrode. Another option for determining porosity is to take a cross-section through an electrode and measuring the shape, size, number and/or distribution of the pores in the electrode. Further, the porosity can be determined by the so-called mercury penetration method (also known as mercury injection method) as known in the state of the art, which allows determination of the pore size distribution in the electrode.

The porosity modifier can be selected from the group consisting of a solvent, a surfactant, a blowing agent, a high-molecular binder and combinations thereof. Typically, the electrode slurry must be homogenized before being applied on a current collector. The porosity modifier especially has the function of stabilizing, enlarging and/or creating bubbles in the electrode slurry during slurry preparation. In this way, the porosity in the resulting anode prepared from the electrode slurry can be increased, too.

In one embodiment, the solvent is a hydrophilic solvent having unlimited solubility in water, preferably an alcohol with up to four carbon atoms, e.g. methanol and ethanol. The hydrophilic solvent can optionally comprise water. Hydrophilic solvents can stabilize bubbles in the electrode slurry formed by additional porosity modifiers and/or further components of the electrode slurry, e.g. binders. In this way, larger bubbles and/or a higher number of bubbles will remain in the electrode slurry during established manufacturing procedures for anodes.

Every hydrophilic solvent can be used which is compatible with the other components of the electrode slurry. Optionally, the solvent can be removed from the electrode slurry after application of the electrode slurry on the anode foil. In case the hydrophilic solvent comprises water, care must be taken to ensure that the water is removed to avoid unwanted reactions during the later operation of the anode in a lithium ion battery.

The amount of the hydrophilic solvent in the electrode slurry can be in the range of from 50 to 100 wt.%, based on the total weight of the solvent used in the electrode slurry.

The surfactant used as a porosity modifier especially has a hydrophilic-lipophilic balance (HLB) of 4 or more, preferably of 7 or more. The HLB can be determined according to Griffin's method by the formula HLB = 20 x Mₕ/M, wherein Mₕ is the molecular mass of the hydrophilic portion of the surfactant and M is the total molecular mass of the surfactant. Accordingly, an HLB value of 0 corresponds to a completely hydrophobic surfactant and an HLB value of 20 corresponds to a completely hydrophilic surfactant. A surfactant with an HLB of 4 or more, preferably of 7 or more, provides good stabilization of bubbles in the electrode slurry due to its hydrophilicity.

The surfactant can be selected from an alkyl sulfate, an alkaline salt of a fatty acid and combinations thereof. Preferably, the surfactant is sodium lauryl sulfate and/or ammonium lauryl sulfate. The alkaline salt of a fatty acid is especially selected from an alkaline salt of a C₈ to C₃₂ fatty acid. These surfactants show preferable high hydrophilicity to act as bubble stabilizer during the preparation of the electrode slurry.

The amount of surfactant in the electrode slurry can be 5 wt.% or less, preferably 1.5 wt.% or less, based on the total weight of the solids content in the electrode slurry. Preferably, the surfactant is present in an amount of at least 0.1 wt.% of the solids content. The amount of surfactant should be chosen such that the overall energy density of a lithium ion battery with the anode according to the invention is not significantly reduced.

The blowing agent used as a porosity modifier can be selected from sodium hydrogen carbonate, ammonium carbonate and combinations thereof. The blowing agent is capable of releasing a predetermined amount of at least one inert gas which should not react with the other components of the electrode slurry, e.g. CO₂. The additional gas produced by the blowing agent can increase size of bubbles and/or create new bubbles within the electrode slurry, resulting in a higher porosity of the anode. The blowing agent can be activated by interaction with other components of the electrode slurry, e.g. the solvent, and/or by heat.

The amount of blowing agent in the electrode slurry can be in the range of from 0.1 to 5 wt.%, based on the total weight of solids content of the electrode slurry.

The high-molecular binder can be high-molecular sodium carboxymethyl cellulose. The high-molecular binder especially has a weight-average molecular weight M_{w} of 300,000 g/mol or more, preferably of 400,000 g/mol or more. Carboxymethyl cellulose is an established component in known formulations of electrode slurries. Accordingly, the formulations do not need to be adapted to a large extent if carboxymethyl cellulose is used as high-molecular binder while providing a stabilizing effect of bubbles in the electrode slurry.

The amount of high-molecular binder in the electrode slurry can be in the range of from 0.5 to 10 wt.%, based on the total weight of solids content in the electrode slurry.

In one embodiment, the anode composite shows a volume change of from 10 to 180 % during a charge/discharge cycle of the lithium ion battery, preferably of from 10 to 130 %, more preferably of from 10 to 80 %.

In another embodiment, the anode has a peeling strength after the first charge/discharge cycle of the lithium ion battery of from 2.5 to 30 N/m, preferably of from 3.0 to 10 N/m.

In one embodiment, the electrode slurry is not degassed before application on the current collector. In this way, bubbles which have been formed in the preparation of the electrode slurry are not removed so that the porosity of the anode composite formed from the slurry can be increased.

Further, an inert gas, e.g. CO₂ and/or N₂ can be applied into the electrode slurry during mixing of the components of the electrode slurry to create additional bubbles.

The object of the invention is further solved by a lithium ion battery comprising an anode as described before.

Further properties and advantages of the invention will become apparent by the following description and examples, which shall not be construed in a limiting sense.

The substances and materials used in the Examples are listed in Table 1.

**Table 1: Substances and Materials**

| | **Function** |
|---|---|
| Si nano powder, < 100 nm particle size | Anode active material |
| SiOₓ | Anode active material |
| Acetylene black or carbon black | Conductive additive |
| CMC (Low molecular weight) | Carboxymethylcellulose (low molecular weight); Binder |
| CMC (High molecular weight) | Carboxymethylcellulose (high molecular weight); Porosity modifier/ Binder |
| SBR | Styrene-Butadiene; Binder |
| Sodium lauryl sulfate | Porosity modifier/ Surfactant |
| Ammonium lauryl sulfate | Porosity modifier/ Surfactant |
| Sodium Hydrogen Carbonate | Porosity modifier/ Blowing agent |
| Copper foil | Anode current collector |
| NMC811, LiNi_{0.8}Mn_{0.1}Co_{0.1}O₂ | Cathode active material |
| Separator | Separator (25 µm) made of Polypropylene (PP) |

The materials used in Examples 1 to 5 and in Comparative Examples 1 and 2 are specified in Table 2 below.

In Comparative Examples 1 and 2, no additional porosity modifier was added. A high-molecular binder is used in Example 1 which acts as porosity modifier. No additional porosity modifiers were included in the electrode slurry.

In Examples 2 to 4, the electrode slurry comprised a further porosity modifier in addition to the high-molecular binder.

**Table 2: Composition of the solids content electrode slurries.**

| | Anode active material | Conductive additive | CMC | SBR | Porosity modifier |
|---|---|---|---|---|---|
| Comparative Example 1 | Si nano powder | Acetylene black or carbon black | CMC (LOW MOLECULAR WEIGHT) | SBR | - |
| | 80 wt.% | 5 wt.% | 7.5 wt.% | 7.5wt.% | |
| Example 1 | Si nano powder | Acetylene black or carbon black | CMC (HIGH MOLECULAR WEIGHT) | SBR | - |
| | 80 wt.% | 5 wt.% | 7.5wt% | 7.5 wt. % | |
| Example 2 | Si nano powder | Acetylene black or carbon black | CMC (HIGH MOLECULAR WEIGHT) | SBR | Sodium lauryl sulfate |
| | 80 wt.% | 4.5 wt.% | 7 wt.% | 7 wt.% | 1.5 wt. % |
| Example 3 | Si nano powder | Acetylene black or carbon black | CMC (HIGH MOLECULAR WEIGHT) | SBR | Ammonium lauryl sulfate % |
| | 80 wt.% | 4.5 wt.% | 7 wt.% | 7 wt.% | 1.5 wt. % |
| Example 4 | Si nano powder | Acetylene black or carbon black | CMC (HIGH MOLECULAR WEIGHT) | SBR | Sodium hydrogen carbonate |
| | 80 wt.% | 4.5 wt.% | 7 wt.% | 7 wt.% | 1.5 wt. % |
| Comparative Example 2 | SiO | Acetylene black or carbon black | CMC (LOW MOLECULAR WEIGHT) | SBR | - |
| | 80 wt. % | 5 wt.% | 7.5 wt. % | 7.5 wt. % | |
| Example 5 | SiO | Acetylene black or carbon black | CMC (HIGH MOLECULAR WEIGHT) | SBR | Sodium lauryl sulfate |
| | 80 wt.% | | | 7 wt.% | |
| | | 4.5 wt.% | 7 wt.% | | 1.5wt.% |

The components were dispersed in distilled water with a solids content of 40 wt.% to obtain an anode electrode slurry, which was then applied onto a copper current collector, dried, pressed and assembled into a lithium ion cell with a cathode and a separator. For all Examples and Comparative Examples, the same cell design was used. As cathode active material, NMC811 (LiNi_{0.8}Mn_{0.1}Co_{0.1}O₂) was used.

For the first charge/discharge cycle, the following sequence was used: the first charge was done by charging with constant current (CC) to a voltage of 4.2 V with a current of C/10, followed by charging with constant voltage (CV) at 4.2 V till the current reaches C/50. The first discharge was done with a current of C/10 to 2.8 V.

The current in terms of the C rate is defined as the current required to discharge an electrochemical cell from a SoC (state of charge) of 100 % to 0 % in 1 hour. E.g., if an electrochemical cell has a discharge capacity of 10 Ah, 1C is equivalent to a current of 10 A.

The performance of the anodes using anode composites prepared from the electrode slurries given in Table 2 and the lithium ion batteries formed from these anodes are shown in Table 3.

**Table 3: Performance results**

| | Anode composite thickness change during cycling (%) | Peeling strength after cycling (N/m) | Discharge capacity retention after 30 cycles (%) |
|---|---|---|---|
| Comparative Example 1 | 240 | 0.8 | 15 |
| Example 1 | 150 | 3.2 | 70 |
| Example 2 | 100 | 4.2 | 75 |
| Example 3 | 80 | 4.0 | 77 |
| Example 4 | 120 | 3.8 | 68 |
| Comparative Example 2 | 150 | 1.0 | 24 |
| Example 5 | 80 | 3.5 | 65 |

As can be seen from the results presented in Table 3, the Examples according to the invention show low degrees of thickness changes, i.e. volume changes, during cycling while achieving high peeling strength after 30 charge/discharge cycles.

To determine thickness change of the anode composite, the thickness of the anode composite has been measured before the first charge/discharge cycle and after 30 charge/discharge cycles. These values are then compared to calculate the relative thickness change in percent as presented in Table 3.

The peeling strength has been measured according to JIS Z0237 (2009).

Though Comparative Example 2 reaches a similar degree of electrode thickness change as Example 1, it can be seen that the peeling strength of the anode composite of Example 1 is essentially three times as large as the peeling strength of Comparative Example 2.

The combination of a low degree of volume changes and high peeling strength results in much higher discharge capacities after at least 30 charge/discharge cycles in Examples 1 to 5. Accordingly, the cell performance and therefore the lifetime of the lithium ion batteries comprising an anode according to the invention is increased.

## Claims

1. Anode for a lithium ion battery having an anode composite comprising an anode active material supported on a current collector, wherein the anode active material comprises a component selected from the group consisting of Si, SiOₓ, SiC-composite, alloys of Si, Bi and/or Sn, conversion materials and combinations thereof, wherein the anode composite shows a volume change of 180 % or less during a first charge/discharge cycle of the lithium ion battery and wherein the anode composite has a peeling strength after a first charge/discharge cycle of 2.5 N/m or more.

2. Anode according to claim 1 **characterized in that** the anode active material is selected from the group consisting of Si, SiOₓ, Si-C-composite, Si alloys, and combinations thereof.

3. Anode according to claim 1 or 2, wherein the anode composite is obtainable by applying an electrode slurry comprising a porosity modifier on the current collector.

4. Anode according to claim 3, **characterized in that** the porosity modifier is selected from the group consisting of a solvent, a surfactant, a blowing agent, a high-molecular binder and combinations thereof.

5. Anode according to claim 4, **characterized by** one or more of the following features:
- the solvent is a hydrophilic solvent having unlimited solubility in water, preferably an alcohol with up to four carbon atoms, and optionally water;
- the surfactant has a hydrophilic-lipophilic balance (HLB) of 4 or more, preferably of 7 or more;
- the surfactant is selected from an alkyl sulfate, an alkaline salt of a fatty acid or combinations thereof;
- the blowing agent is selected from sodium hydrogen carbonate, ammonium carbonate or combinations thereof;
- the high-molecular binder is high-molecular sodium carboxymethylcellulose.

6. Anode according to any of the preceding claims, **characterized in that** the anode composite shows a volume change of from 10 to 180 % during a charge/discharge cycle, or of from 10 to 130 %, or from 10 to 80 %.

7. Anode according to any of the preceding claims, **characterized in that** the anode composite has a peeling strength after the first charge/discharge cycle of from 2.5 to 30 N/m, preferably of from 3.0 to 10 N/m.

8. Anode according to any of claims 3 to 7, **characterized in that** the electrode slurry is not degassed before application on the current collector.

9. Lithium ion battery comprising an anode according to any of the preceding claims.
